# FASCICULE DE BREVET EUROPEEN

(11) **EP 0 406 078 B1**
(45) Date de publication et mention de la délivrance du brevet: **01.12.1993**
(21) Numéro de dépôt: 90401785.2
(22) Date de dépôt: 22.06.1990
(51) Int. Cl.: F01L 7/02, F02B 25/20, F02B 33/30

(54) **Moteur deux temps à boisseaux tournants et utilisations d'un tel moteur**
Zweiaktmotor mit Drehschiebern und Betrieb dieses Motors
Two-stroke engine with rotating valves and operation of said engine

(30) Priorité: 30.06.1989 FR 8908853
(43) Date de publication de la demande: 02.01.1991
(73) Titulaire: INSTITUT FRANCAIS DU PETROLE, 92502 Rueil-Malmaison (FR)
(72) Inventeur: Duret, Pierre, F-75009 Paris (FR); Douaud, André, F-78750 Mareil Marly (FR)

(56) Documents cités:
- EP-A- 0 099 873
- EP-A- 0 100 713
- EP-A- 0 249 129
- DE-A- 3 515 262
- FR-A- 940 278
- FR-A- 2 496 757

## Description

La présente invention concerne un moteur deux temps dont la distribution est assurée notamment par des boisseaux rotatifs ou tournants.

L'alimentation en carburant peut se fait par injection directe dans le cylindre, par injection pneumatique ou liquide.

De plus, le moteur peut être à essence ou diesel et peut servir pour motoriser des véhicules automobiles.

Par ailleurs, le dispositif selon l'invention est applicable pour la transformation d'un moteur quatre temps en un moteur deux temps. L'un des problèmes notamment rencontrés lors d'une telle transformation est la limitation en régime des distributions à soupape pour lesquelles le régime critique est rapidement atteint, puisque, pour une telle transformation, à régime de moteur égal (vilebrequin), les soupapes sont soumises dans un moteur deux-temps, à des fréquences de fonctionnement doubles de celles auxquelles elles sont soumises dans un moteur à quatre-temps.

De plus, certains modes de réalisation selon la présente invention, permettent de réduire les pertes par la canalisation d'échappement de mélange carburé lors de la phase de balayage.

Dans le document FR-A-2.496.757 sont prévues une admission commandée de mélange carburé et une alimentation d'air non carburée débouchant en partie basse du cylindre, ces admissions communicant chacune avec le carter-pompe utilisé comme source de pression.

Dans le brevet français FR 940 278 on prévoit un boisseau tournant pour contrôler l'admission de mélange carburé et plusieurs soupapes pour contrôler l'échappement.

Le document EP-A-0.249.129 montre un moteur deux temps muni, en partie haute de la chambre de combustion, de soupapes d'admission et d'échappement, la soupape d'admission étant connectée à des moyens de compression.

Le document DE-A-3 515 262 concerne un moteur deux-temps comportant au moins un cylindre ayant une chambre de combustion, un conduit d'échappement relié à ladite chambre de combustion, au moins un conduit d'admission d'un gaz frais comprimé par des moyens de compression pour fournir ledit gaz frais comprimé, des moyens d'injection ou de dosage de carburant, au moins un premier boisseau rotatif pour l'ouverture et la fermeture du conduit d'échappement, le boisseau rotatif comprenant au moins un passage et le moteur comportant en outre un deuxième boisseau rotatif connecté aux moyens de compression à travers le conduit d'admission et comportant au moins un passage.

Le moteur deux temps selon l'invention est caractérisé selon le revendication 1.

Le moteur pourra comporter un dispositif d'injection pneumatique, éventuellement commandé par un solénoïde.

Selon l'invention, le deuxième boisseau pourra comporter deux passages, dont le premier pourra être connecté au circuit d'alimentation en gaz frais et au moyen de compression afin de réaliser le balayage et le remplissage dudit cylindre ; le deuxième passage est relié aux moyens de compression par un circuit comportant les moyens d'injection ou de dosage de carburant. L'ouverture du deuxième passage dans la chambre de combustion pourra se faire plus tard que celle du premier passage.

Le deuxième boisseau pourra être connecté aux moyens de compression par un premier circuit comportant des moyens d'alimentation en carburant et réalisant l'injection pneumatique, et le moteur pourra comporter, en outre, un deuxième circuit d'alimentation du cylindre en gaz frais non carburé. Ce deuxième circuit pourra relier les moyens de compression à une lumière ménagée sur les parois du cylindre à la partie basse de la chambre de combustion. Le deuxième circuit pourra comporter un moyen de vannage.

Au moins l'un des boisseaux pourra être logé dans la partie haute de la chambre de combustion, notamment dans la culasse. Le premier boisseau pourra comporter deux passages.

Le moteur selon l'invention peut être un moteur essence ou diesel, c'est-à-dire, alimenter par du gaz-oil.

La présente invention sera mieux comprise et ses avantages apparaitront plus clairement à la description qui suit d'exemples nullement limitatifs, illustrés par les figures ci-annexées, parmi lesquelles :
- les figures 1 et 2 illustrent un art antérieur, et
- les figures 3 à 6 illustrent plusieurs mode de réalisation de l'invention.

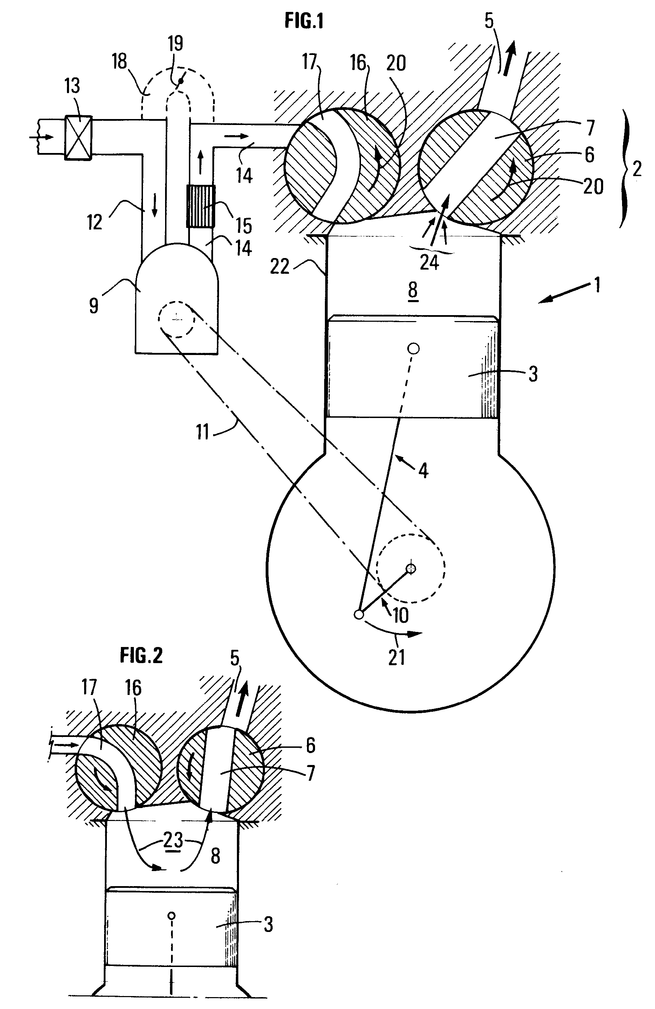

La figure 1 représente un cylindre 1 d'un moteur selon l'invention. Ce moteur comporte une culasse 2, un piston 3 et un système bielle-manivelle 4.

La référence 5 désigne la pipe d'échappement.

La référence 6 désigne un boisseau tournant placé à l'échappement du cylindre 1. Ce boisseau comporte un passage 7 qui met périodiquement en relation la chambre de combustion 8 et la pipe d'échappement 5 lorsqu'il faut évacuer les gaz brûlés de la chambre de combustion 8.

Ce moteur comporte un compresseur mécanique externe 9 entrainé à partir du vilebrequin 10 par des moyens d'entrainement 11, tels une courroie. Ce compresseur est alimenté en air par la canalisation 12 à travers un filtre à air 13. La canalisation 14 sert à alimenter la chambre de combustion 8 en gaz frais, cette canalisation peut comporter des moyens de refroidissement 15 des gaz frais après compression.

Sur le mode de réalisation de la figure 1, l'alimentation en air frais de la chambre de combustion 8 se fait par un boisseau rotatif 16 relié à la canalisation 14. Ce boisseau comporte un passage 17. Ce passage 17 peut être profilé pour faciliter l'écoulement du fluide et éviter les changements de direction brusques de l'écoulement. De plus, le boisseau d'admission 16 peut avoir une forme étudiée pour introduire l'air en l'orientant d'abord vers la paroi 22, puis de plus en plus vers le milieu de la chambre de combustion 18 et créer ainsi une boucle de balayage, comme représenté à la figure 2 par les flêches 23.

Les boisseaux rotatifs ou tournants 6 et 16 sont logés dans la culasse 2.

Les boisseaux rotatifs sont entrainés en rotation à partir du vilebrequin 10, par exemple, par une chaine de distribution ou une courroie crantée.

De manière facultative, les canalisations 12 et 14 peuvent être connectées par un by-pass 18 contrôlé par un volet 19. Cette canalisation est représentée en traits pointillés.

La figure 1 représente l'instant du cycle correspondant au début de l'ouverture du boisseau d'échappement 6 qui se fait en avance par rapport à l'ouverture du boisseau d'admission 16.

Les flêches 20 indiquent le sens de rotation des boisseaux tournants et la flêche 21 le sens de rotation du vilebrequin.

Les flêches 24 représentent les gaz d'échappement qui quittent la chambre de combustion 8.

La figure 2 représente le même moteur que la figure 1, alors que le piston est au point mort bas. Ceci correspond à la phase de balayage de la chambre de combustion. Le balayage est illustré par les flêches 23.

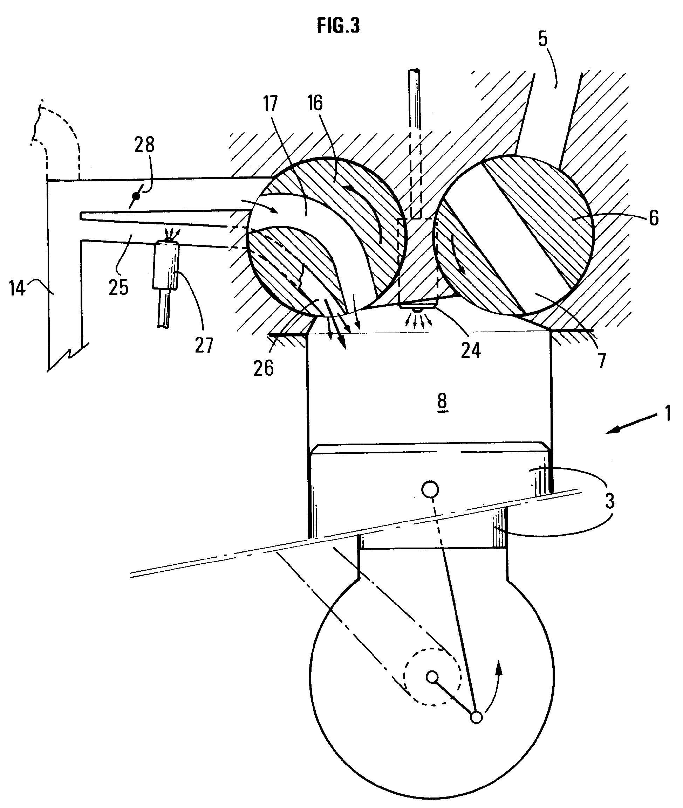

La figure 3 représente le cylindre 1, échappement fermé et en fin de phase d'admission. Sur cette figure, on a représenté deux systèmes d'alimentation en combustible, mais il convient de noter que l'un de ces systèmes exclut l'autre.

Le premier système, qui correspond à un état connu de la technique et non pas à l'invention, réalise une injection directe dans la chambre de combustion 8 par un injecteur haute pression 24.

Typiquement, cet injecteur et sa pompe d'alimentation délivrent un jet sous une pression comprise entre 50 et 100 bars pour un moteur à essence et de quelques centaines de bars pour un moteur diesel.

Une autre possibilité est de réaliser une injection pneumatique directement dans la chambre de combustion, notamment avec une pression d'introduction sous une pression typiquement comprise entre 2 et 10 bars.

Selon l'invention, le carburant est délivré par un injecteur ou moyen de dosage en amont de la chambre de combustion 8 et du boisseau 16. Cette injection peut se faire dans la canalisation 14, ou mieux dans une canalisation auxiliaire 25.

Dans ce dernier cas, le boisseau 16 est à double passage et comporte, en plus du passage 17, un passage 26.

Le passage 26 réalise une admission différée par rapport au passage 17. Ainsi, on réalise une double introduction par le boisseau 16 (Fig. 3), l'une étant produite par le passage 17, peu après le début de l'échappement, avec de l'air comprimé seul pour le balayage et le remplissage du cylindre 8 alors que l'autre introduction qui est réalisée par le passage 26 est décalée dans le cycle pour introduction du mélange carburé pneumatique.

Le carburant est introduit par l'injecteur 27. Un vannage 28 (Fig. 3A) pourra être prévu pour ajuster le débit d'air pur au mélange carburé et par exemple le diminuer préférentiellement quand la charge du moteur diminue.

De même, le boisseau d'échappement peut comporter deux passages réalisant des ouvertures d'échappement décalées dans le cycle. Les passages de ces boisseaux pourront être reliés en sortie à deux conduits dont l'un pourrait être ouvert ou fermé par un dispositif de vannage non représenté. Il en resulterait la possibilité simple d'avoir deux diagrammes d'ouverture d'échappement différents à choisir suivant les conditions de charge et de régime.

Dans tous les cas, les passages d'échappement sont préférentiellement calés de manière dissymétrique par rapport au point mort bas (PMB) et l'amplitude angulaire de leur ouverture est plus importante avant le PMB qu'après.

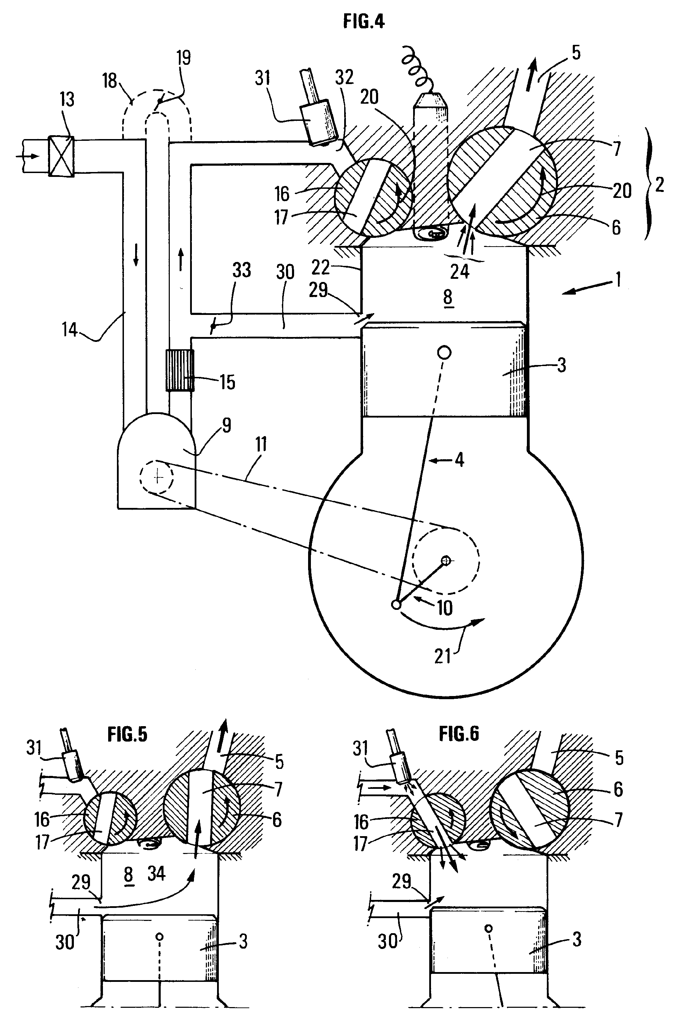

La figure 4 représente un autre mode de réalisation de l'invention.

Les éléments communs entre les figures 1 et 4 portent les mêmes références.

Le mode de réalisation de la figure 4 se distingue de celui de la figure 1 en ce que le cylindre 1 comporte au moins une lumière 29 contrôlée par le piston 3 et reliée par une canalisation 30 au conduit d'admission 14 d'air comprimé. Cette canalisation 30 permet le balayage et remplissage du cylindre 1. Le boisseau 16 d'admission sert à contrôler l'introduction du mélange air/carburant obtenu par injection pneumatique. Cette injection s'obtient par un injecteur ou moyen de dosage du carburant 31 qui délivre le carburant dans le conduit auxiliaire 32.

L'admission d'air pur ou de gaz frais par la lumière 29 pourra être vannée par une vanne 33 quand la charge diminue et pourra même être complétement fermée. Le cylindre n'est alors alimenté que par le mélange carburé traversant le boisseau 16 (Fig. 4).

La figure 5 montre le cylindre alors que la lumière 29 est ouverte et que le boisseau 16 ne permet pas encore le passage du mélange carburé.

Les flêches 34 représentent le balayage et le remplissage du cylindre ou chambre de combustion 8.

Sur la figure 6, le boisseau d'échappement 6 est fermé et donc le mélange peut être injecté par le passage 17 du boisseau 16. Les risques de pertes de mélange carburé sont écartés.

Le fonctionnement des deux modes de réalisation proposés est donné ci-après.

Pendant la phase de détente, après la combustion, l'échappement 5 s'ouvre en premier (Fig. 1). Le piston continue sa course descendante. L'admission par boisseau de gaz frais seul (non carburé) se produit ensuite. Ce gaz est introduit sous pression par un boisseau 16 (Fig. 1) ou une lumière 29 (Fig. 4). Dans le cas d'une lumière démasqué par le mouvement du piston, le diagramme d'ouverture sera quasi-symétrique. L'introduction de cet air permet de balayer le cylindre en chassant les gaz brûlés vers l'échappement, comme représenté aux figures 2 et 5. Ensuite, cet air participe au remplissage du cylindre particulièrement après fermeture de l'échappement.

Le carburant est introduit préférentiellement après la fermeture de l'échappement (qui peut éventuellement débuter au voisinage de celle-ci).

Différentes solutions sont possibles :
- au travers d'un conduit dans le boisseau, l'introduction de mélange pneumatique est formé d'air comprimé fourni par le compresseur et de carburant dosé par un dispositif de dosage cyclique,
- au travers d'un injecteur pneumatique comportant une petite soupape commandée par solénoïde, ou par un autre moyen commandé mécaniquement.

Les boisseaux selon l'invention pourront être équipés d'un système d'étanchéité par rapport à la chambre de combustion. Ce système pourra être tels ceux décrits dans les brevets FR-2.531.174 ou FR-2.123.968.

## Revendications

1. Moteur deux temps comportant au moins un cylindre (1) ayant une chambre de combustion (8), un conduit d'échappement (5) relié à ladite chambre de combustion (8), au moins un conduit d'admission (14) d'un gaz frais comprimé par des moyens de compression (9) pour fournir ledit gaz frais comprimé, des moyens d'injection ou de dosage de carburant (27, 31), au moins un premier boisseau rotatif (6) pour l'ouverture et la fermeture dudit conduit d'échappement (5) ledit boisseau rotatif (6) comportant au moins un passage (7), le moteur comportant en outre au moins un deuxième boisseau rotatif (16) connecté auxdits moyens de compression (9) à travers ledit conduit d'admission (14) et comportant au moins un passage (17 ; 26) caractérisé en ce que l'introduction dans ladite chambre de combustion (8) de mélange carburé se fait à travers ledit passage (17 ; 26) du deuxième boisseau rotatif, le mélange carburé étant formé en amont dudit deuxième boisseau rotatif (16) à partir du gaz frais comprimé nécessaire pour réaliser une injection pneumatique de carburant, le moteur comportant en outre un deuxième circuit (30) reliant ledit moyen de compression (9) à ladite chambre de combustion (8) pour réaliser l'alimentation du cylindre en gaz frais non carburé.

2. Moteur selon la revendication 1, caractérisé en ce que lesdits moyens d'injection de carburant sont constitués d'un dispositif d'injection pneumatique (27), commandé par un solénoïde.

3. Moteur selon la revendication 1, caractérisé en ce que ledit deuxième boisseau (16) comporte deux passages (17, 26) : le premier (17) est connecté audit circuit d'alimentation en gaz frais et au moyen de compression (9) afin de réaliser le balayage et le remplissage dudit cylindre ; le deuxième passage (26) est relié auxdits moyens de compression par un circuit (25) comportant lesdits moyens d'injection ou de dosage de carburant (27), l'ouverture du deuxième passage (26) dans ladite chambre de combustion se faisant après celle du premier passage.

4. Moteur selon la revendication 1, caractérisé en ce que ledit deuxième boisseau (16) est connecté aux moyens de compression (9) par un circuit (32, Fig. 4) comportant lesdits moyens d'alimentation en carburant (31), et réalisant l'injection pneumatique et en ce que ledit circuit (30) d'alimentation en gaz frais relie les moyens de compression (9) à une lumière (29) ménagée sur les parois du cylindre à la partie basse de la chambre de combustion.

5. Moteur selon la revendication 4, caractérisé en ce que ledit circuit d'alimentation (30) comporte un moyen de vannage (33).

6. Moteur selon l'une des revendications précédentes, caractérisé en ce que l'un au moins desdits boisseaux (6, 16) est logé dans la partie haute de la chambre de combustion (8), notamment dans la culasse.

7. Moteur selon la revendication 1 à 6, caractérisé en ce que le premier boisseau (6) comporte deux passages.

8. Utilisation du moteur selon l'une des revendications précédentes avec de l'essence.

9. Utilisation du moteur selon la revendication 2, avec du gazole.

## Patentansprüche

1. Zweitaktmotor, umfassend wenigstens einen Zylinder (1) mit einer Verbrennungskammer (8), einer mit der Verbrennungskammer (8) verbundenen Auslaßleitung (5), wenigstens einer Einlaßleitung (14) eines frischen durch Komprimierungsmittel (9) komprimierten Gases, um das frische komprimierte Gas zu liefern, Kraftstoffeinspritz- oder -dosiermittel (27, 31), wenigstens einen ersten Drehschieber (6) zur Öffnung und zur Schließung der Auslaßleitung (5), welcher wenigstens einen Durchlaß (7) umfaßt, wobei der Motor außerdem wenigstens einen zweiten Drehschieber (16) umfaßt, der mit den Komprimierungsmitteln (9) über die Einlaßleitung (14) verbunden ist und wenigstens einen Durchlaß (17; 26) aufweist, dadurch gekennzeichnet, daß die Einführung von Brennstoffgemisch in die Verbrennungskammer (8) über den Durchlaß (17; 26) des zweiten Drehschiebers erfolgt, wobei das Brennstoffgemisch stromaufwärts des zweiten Drehschiebers (16) auf der Grundlage von frischem komprimierten Gas gebildet wird, das notwendig ist, um eine pneumatische Einspritzung von Kraftstoff durchzuführen, wobei der Motor außerdem eine zweite Leitung (30) umfaßt, welche die Komprimierungsmittel (9) mit der Verbrennungskammer (8) verbindet, um die Versorgung des Zylinders mit frischem, nicht mit Kraftstoff vergasten Gas durchzuführen.

2. Motor nach Anspruch 1, dadurch gekennzeichnet, daß die Kraftstoffeinspritzmittel aus einer pneumatischen Einspritzungseinrichtung (27) gebildet sind, die durch ein Solenoid gesteuert ist.

3. Motor nach Anspruch 1, dadurch gekennzeichnet, daß der zweite Drehschieber (16) zwei Durchlässe (17, 26) umfaßt: der erste (17) ist mit der Versorgungsleitung an frischem Gas und den Komprimierungsmitteln (9) verbunden, um die Spülung und die Ausfüllung des Zylinders durchzuführen; der zweite Durchlaß (26) ist mit den Komprimierungsmitteln über eine Leitung (25) verbunden, welche die Kraftstoffeinspritz- oder -dosiermittel (27) umfaßt, wobei sich die Öffnung des zweiten Durchlasses (26) in die Verbrennungskammer nach derjenigen des ersten Durchlasses vollzieht.

4. Motor nach Anspruch 1, dadurch gekennzeichnet, daß der zweite Drehschieber (16) mit den Komprimierungsmitteln (9) über eine Leitung (32, Fig. 4) verbunden ist, welche die Versorgungsmittel an Kraftstoff (31) umfaßt und die pneumatische Einspritzung durchführen, und die Versorgungsleitung (30) an frischem Gas die Komprimierungsmittel (9) mit einem Schlitz (29) verbindet, welcher an den Seitenwänden des Zylinders in dem unteren Bereich der Verbrennungskammer angeordnet ist.

5. Motor nach Anspruch 4, dadurch gekennzeichnet, daß die Versorgungsleitung (30) Schieberbetätigungsmittel (33) umfaßt.

6. Motor nach einem der vorhergehenden Ansprüche, dadurch gekennzeichnet, daß der eine wenigstens der Drehschieber (6, 16) in dem oberen Bereich der Verbrennungskammmer (8), insbesondere in dem Zylinderkopf, angeordnet ist.

7. Motor nach Anspruch 1 bis 6, dadurch gekennzeichnet, daß der erste Drehschieber (6) zwei Durchlässe umfaßt.

8. Verwendung des Motors nach einem der vorhergehenden Ansprüche mit Benzin.

9. Verwendung des Motors nach einem der vorhergehenden Ansprüche mit Gasöl.

## Claims

1. Two-stroke engine comprising at least one cylinder (1) having a combustion chamber (8), an exhaust conduit (5) connected to said combustion chamber (8), at least one conduit (14) for the intake of a pure gas compressed by compression means (9) so that said pure gas is supplied in a compressed state, means of injecting or adding fuel (27, 31), at least a first rotary sleeve (6) for opening and closing said exhaust conduit (5), said rotary sleeve (6) comprising at least one passage (7), the engine including in addition at least a second rotary sleeve (16) connected to said means of compression (9) via said intake conduit (14) and comprising at least one passage (17, 26), characterised in that the introduction of carburetted mixture into said combustion chamber (8) is effected via said passage (17, 26) of the second rotary sleeve, the carburetted mixture being formed upstream of said second rotary sleeve (16) with the pure compressed gas needed for pneumatic injection of fuel, the engine comprising in addition a second circuit (30), connecting said compression means (9) to said combustion chamber (8), for feeding the cylinder with uncarburetted pure gas.

2. Engine according to Claim 1, characterised in that said means of injecting fuel are composed of a pneumatic injection device (27) controlled by a solenoid.

3. Engine according to Claim 1, characterised in that said second sleeve (16) comprises two passages (17, 26): the first (17) is connected to said circuit for feeding with pure gas and to the means of compression (9), so that said cylinder can be swept and refuelled; the second passage (26) is connected to said means of compression by a circuit (25) comprising said means of injecting or adding fuel (27), the second passage (26) opening into said combustion chamber after the first passage.

4. Engine according to Claim 1, characterised in that said second sleeve (16) is connected to the means of compression (9) by a circuit (32, Fig. 4) comprising said means of feeding with fuel (31) and effecting pneumatic injection, and in that said circuit (30) for feeding with pure gas connects the means of compression (9) to a port (29) in the wall of the cylinder in the lower portion of the combustion chamber.

5. Engine according to Claim 4, characterised in that said feeding circuit (30) comprises a valving means (33).

6. Engine according to one of the preceding Claims, characterised in that at least one of said sleeves (6, 16) is situated in the upper portion of the combustion chamber (8), especially in the cylinder head.

7. Engine according to Claims 1 to 6, characterised in that the first sleeve (6) comprises two passages.

8. Use of the engine according to one of the preceding Claims with petrol.

9. Use of the engine according to Claim 2 with diesel.
